# EUROPEAN PATENT APPLICATION

(11) **EP 2 800 034 A1**
(43) Date of publication of application: **05.11.2014**
(21) Application number: 13165898.1
(22) Date of filing: 30.04.2013
(51) Int. Cl.: G06Q 10/06

(54) **Method and system for operating a project portfolio management tool and a product lifecycle management tool**

(71) Applicant: Accenture Global Services Limited, Dublin 4 (IE)
(72) Inventor: Unger, Joseph, 72336 Balingen (DE)
(74) Representative: Müller-Boré & Partner Patentanwälte PartG mbB

(57) **Abstract**

The invention relates to a method for operating a Project Portfolio Management tool (PPM tool) and a Product Lifecycle Management tool (PLM tool). The PPM tool (11) is provided for managing a group of projects and the PLM tool (12) is provided for executing a specific project. A Connector tool (14) is provided for generating a comparative report which includes data from the PPM tool (11) and the PLM tool (12).

## Description

The invention relates to a method and a system for operating a Project Portfolio Management tool and a Product Lifecycle Management tool.

Project Portfolio Management tools (subsequently called PPM tools) are generally known. For example, "Primavera Enterprise Project Portfolio Management" is a PPM tool provided by Oracle or "Microsoft Enterprise Project Management Solutions" is a PPM tool provided by Microsoft.

A PPM tool may be used as a planning tool in an enterprise. A PPM tool enables an enterprise to collectively analyze and manage a group of running or proposed projects based on numerous characteristics. One of the objectives of a PPM tool is to schedule activities of the projects under consideration depending on constraints given by customers, strategic goals of the enterprise or real-world factors. As well, reports may be generated by the PPM tool.

Furthermore, Product Lifecycle Management tools (subsequently called PLM tools) are also generally known. Here, an example is "Teamcenter" provided by Siemens.

A PLM tool may be used as an execution tool in an enterprise. A PLM tool enables an enterprise to carry out a specific project during its entire lifecycle. Among others, the definition, design, control and finalization of a product or a project may be carried out with the help of a PLM tool. Furthermore, reports may be generated by the PLM tool.

Basically, PPM tools and PLM tools run independently of each other. However, it is possible to manage a specific project or product of an enterprise with a PLM tool and to manually input the data of the specific project into a PPM tool. In this case it is possible to manage the specific project or product as one of a portfolio of projects of the enterprise.

It is an object of the invention to improve the utilization of PPM tools and PLM tools.

The invention solves this object with methods according to claim 1 and claim 2 as well as with systems according to claim 8 and claim 9.

The inventive method for operating a PPM tool and a PLM tool is **characterized in that** a Connector tool generates a comparative report which includes data from the PPM tool and the PLM tool. As well, the invention is **characterized in that** a Connector tool generates a comparative report which includes data from the PPM tool at different points in time or which includes data from the PLM tool at different points in time.

The invention offers the advantage to generate a new kind of report which was not possible to be created as yet. The comparative report compares data from the PPM tool and/or the PLM tool at different or the same point in time. This allows a user to carry out subsequent evaluations based on these comparative data which were not possible to be carried out as yet. Therefore, the invention enables a user to more accurately control a specific project as well as a group of projects.

For example, the user may carry out a trend analysis or evaluate a rate at which a specific project is progressing. This evaluation was not possible as yet. As already outlined, the accuracy of the execution of a specific process is increased.

In an embodiment of the invention, the Connector tool automatically exchanges data between the PPM tool and the PLM tool.

This offers the advantage that it is not necessary to manually input data from the PLM tool into the PPM tool in order to manage a specific project as one of a portfolio of projects of an enterprise. Instead, the relevant data are automatically forwarded from the PLM tool to the PPM tool so that the PPM tool may consider the specific project within the group of projects managed by the PPM tool. Further features, applications and advantages of the invention will become apparent from the following description of exemplary embodiments of the invention which are shown in the accompanying figures. There, all described and shown features themselves or in any combination represent the subject matter of the invention, independently of their wording in the description or of their representation in the figures and independently of their combination in the claims or the dependencies of the claims.

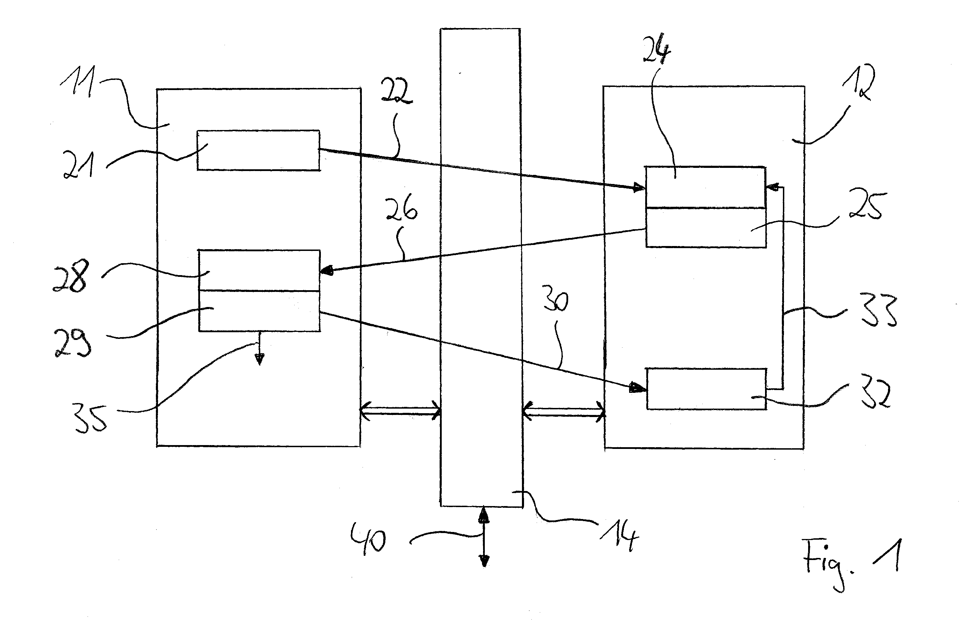

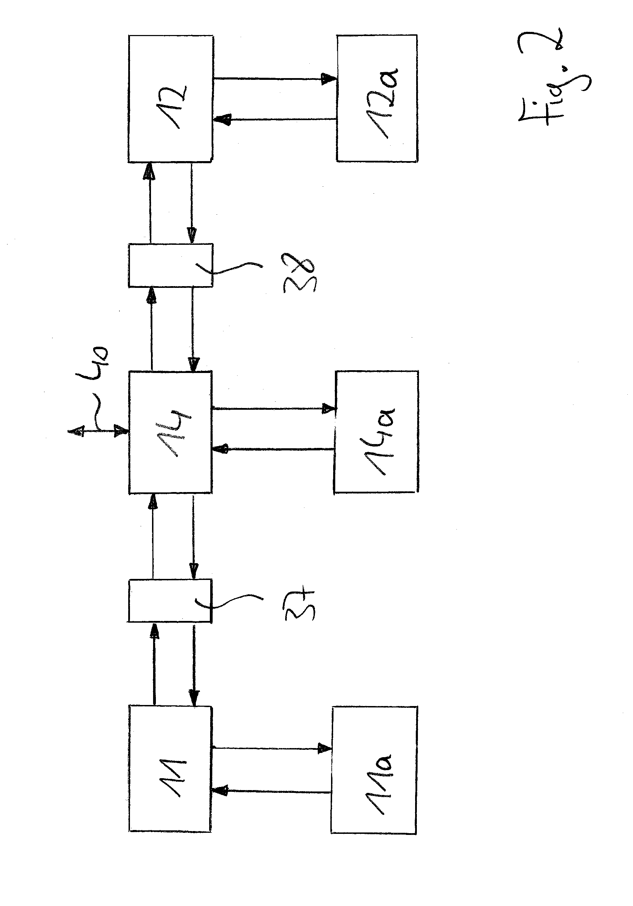

Figure 1 shows a schematic block diagram of an embodiment of a system and a method according to the invention, and figure 2 shows a schematic block diagram of an exemplary architecture of the inventive system.

In figure 1, a PPM tool 11 (PPM = Project Portfolio Management) and a PLM tool 12 (PLM = Product Lifecycle Management) are present. Furthermore, a Connector tool 14 is shown which is able to receive and transmit information from and to the PPM tool 11 and from and to the PLM tool 12.

As an example, the PLM tool 12 may be dedicated to a specific project or product, i.e. to the production of a safety belt of a vehicle. In this case, the PLM tool 12 comprises numerous data of the production of the safety belt, in particular technical data of the safety belt, application data, production data, time data, and so on. With this data, the PLM tool 12 is able to manage the execution of the production of the safety belt.

At a predetermined state during the application of the PLM tool 12, i.e. during the execution of the production, the Connector tool 14 is informed about the respective state, e.g. of the completion of the state. This information may be forwarded from the PLM tool 12 to the Connector tool 14 or the Connector tool 14 fetches the information from the PLM tool 12. Based on the information, the Connector tool 14 causes the PLM tool 12 to carry out a scheduled additional step.

For example, if the execution of the production of a batch of safety belts is completed, the Connector tool 14 causes the PLM tool 12 to send an update of data to the PPM tool 11.

Similarly, at a predetermined state during the application of the PPM tool 11, the Connector tool 14 is informed about the respective state, e.g. of the completion of the state. This information may be forwarded from the PPM tool 11 to the Connector tool 14 or the Connector tool 14 fetches the information from the PPM tool 11. Based on the information, the Connector tool 14 causes the PPM tool 11 to carry out a scheduled additional step.

For example, if the PPM tool 11 has completed an update of a master schedule for a specific project, the Connector tool 14 causes the PPM tool 11 to send the update of the master schedule to the PLM tool 12 which is assigned to the specific project.

Based on these capabilities of the Connector tool 14, the following exemplary sequence, as shown in figure 1, may occur:
In a step 21, the PPM tool 11 creates a master schedule for a specific project. All necessary assignments like start date, end date, activity duration, and so on, are associated to the desired activities. Furthermore, the PPM tool 11 assigns a predetermined activity code to the activities.

After the creation of the master schedule is completed, the Connector tool 14 causes the PPM tool 11 to send, in a step 22, the master schedule to the PLM tool 12 which is assigned to the specific project or product. In connection with this step 22, the Connector tool 14 identifies and associates the activity code to a predetermined schedule template and/or to a predetermined workflow template. As well, all necessary assignments of the start date, the end date and/or the activity duration are made.

The PLM tool 12 receives the master schedule, as shown in a step 24. In particular, a work breakdown of activities is made by the PLM tool 12. As well, the PLM tool 12 may create a schedule and/or may link activities to workflows and/or may assign and trigger the execution of workflows and/or completion of workflows. Furthermore, the PLM tool 12 may create sub-schedules if a predetermined schedule template is present, or workflows, if a predetermined workflow template is present. As well, the PLM tool 12 may execute a detailed planning and/or may assign deliverables of dependencies, and so on.

Then, as shown in a step 25, the PLM tool 12 executes its tasks, i.e. it carries out its routine management steps based on the master schedule.

The progress of the execution is monitored by the PLM tool 12. For example, a roll-up of weightages which are associated to a schedule, results in a percentage relating to the completion of the activity. Similarly, a percentage relating to a sub-schedule and/or to an overall schedule may be evaluated.

Then, the Connector tool 14 causes the PLM tool 12 to send, in a step 26, the progress status and/or the updates back to the PPM tool 11. For example, the weightages and rolled-up dates with the actual start date, end date and time needed for the activity may be sent to the PPM tool 11.

The PPM tool 11 receives the progress status and/or the updates and carries out its routine management steps, as shown in an exemplary step 28.

Then, the PPM tool 11 updates the master schedule based on the received data, as shown in a step 29. For example, the master schedule may be updated with any new or further modification including an addition and/or a deletion of tasks.

Then, the Connector tool 14 causes the PPM tool 11 to send, in a step 30, the changes of the master schedule to the PLM tool 12.

The PLM tool 12 receives the changes of the master schedule in a step 32. Then, in a step 33, the PLM tool 12 continues with step 24 and carries out its management steps as outlined above, however, based on the updated master schedule.

The sequence may then be continued with steps 25, 26 and so on, as described above.

If the specific project is finally terminated, the PPM tool 11 may create appropriate information and may then continue with an internal step 35. Due to this information, the Connector tool 14 does not cause the PPM tool 11 to send the information to the PLM tool 12.

Generally, the Connector tool 14 automatically couples the PPM tool 11 and the PLM tool 12. Among others, the Connector tool 14 automatically exchanges the schedules of the PPM tool 11 and the PLM tool 12. As a result, the schedules of the PPM tool 11 and the PLM tool 12 are automatically updated.

As a result, the Connector tool 14 allows to automatically synchronize the schedules of the PPM tool 11 and the PLM tool 12.

Similarly, the Connector tool 14 allows to automatically synchronize any data between the PPM tool 11 and the PLM tool 12.

In figure 2, an embodiment of an architecture of the described system is shown.

According to figure 2, the PPM tool 11 is coupled with a database 11a and the PLM tool 12 is coupled with a database 12a. As well, the Connector tool 14 is coupled with a distinct database 14a. All tools 11, 12, 14 may send data to and receive data from the corresponding data bases 11a, 12a, 14a.

The communication between the Connector tool 14 on one hand and the PPM tool 11 and PLM tool 12 on the other hand, is based on known so-called Web Services and/or known so-called SOA Services (SOA = service-oriented architecture). According to the example of figure 2, the PPM tool 11 is coupled with the Connector tool 14 via a Web Service 37 and the PLM tool 12 is coupled with the Connector tool 14 via a SOA Service 38.

In an alternative embodiment, the communication between the PPM tool 11 on one hand and the PLM tool 12 on the other hand may be carried out directly under the control of the Connector tool 14. In this case, the communication may be done by using the mentioned Web Services and/or SOA Services.

The Connector tool 14 is implemented as a computer program comprising a number of digital instructions being carried out by a computer. The Connector tool 14 may be running on one or more computers. In particular, the PPM tool 11, the PLM tool 12 and the Connector tool 14 may be implemented on a number of computers within a so-called Intranet of an enterprise.

The Connector tool 14 provides a user interface to allow a user to communicate with the Connector tool 14. This is indicated as an arrow 40 in figures 1 and 2.

Via the user interface 40, the user may define the conditions of a report. Among others, the user may define the data of the report which have to be output to the user. As well, the user may define a point in time when the report has to be established, e.g. the point in time when the PPM tool 11 enters a predetermined state.

Then, when the Connector tool 14 is informed that the defined point in time has arrived, e.g. when the predetermined state of the PPM tool 11 is present, the Connector tool 14 automatically gathers the defined data from the PPM tool 11 and automatically outputs the report with the data via the user interface 40 to the user.

Similarly, the user may define the data of a report which have to be output to the user when the PLM tool 12 enters a predetermined state. Then, when the Connector tool 14 is informed that the predetermined state of the PLM tool 12 is present, the Connector tool 14 automatically gathers the requested data from the PLM tool 12 and automatically outputs the report with the data via the user interface 40 to the user.

The reports may also be established at any other point in time being given by the user and/or in predefined time intervals. As well, the report may be established without outputting it via the user interface 40 to the user.

All reports are stored in the database 14a of the Connector tool 14.

Furthermore, the user may define a comparative report. A comparative report is a report which includes and/or compares data of the PPM tool 11 and/or the PLM tool 12 at different and/or identical points in time.

When the comparative report relates to the current point in time, then it may be established similarly as described above. When the comparative report relates to an elapsed point in time, it may be established based on reports stored in the database 14a of the Connector tool 14.

In general, the comparative report is directed to a comparison of the states of the PPM tool 11 and the PLM tool 12 at the same point in time or at different points in time. Correspondingly, the comparative report is directed to a comparison of the states of the PPM tool 11 at different points in time or to a comparison of the states of the PLM tool 12 at different points in time.

In the following, the comparative reports are described in more detail based on the above mentioned schedules as exemplary data. Of course, the reports may also comprise other or additional data.

The comparative reports may be defined by the user at least based on the following combinations:
1) The comparative report is based on the current schedule of the PPM tool 11 and the last-synchronized schedule of the PPM tool 11.
2) The comparative report is based on the current schedule of the PPM tool 11 and the current schedule of the PLM tool 12.
3) The comparative report is based on the current schedule of the PPM tool 11 and the last-synchronized schedule of the PLM tool 12.
4) The comparative report is based on the last-synchronized schedule of the PPM tool 11 and the last-synchronized schedule of the PLM tool 12.
5) The comparative report is based on the last-synchronized schedule of the PPM tool 11 and current schedule of the PLM tool 12.
6) The comparative report is based on the current schedule of the PLM tool 12 and the last-synchronized schedule of the PLM tool 12.

With these comparative reports, the schedules of the PPM tool 11 and the PLM tool 12 may be compared at the same point in time or at different points in time. As well, the schedules of either the PPM tool 11 or the PLM tool 12 may be compared at different points in time.

Based on the comparative reports, a trend analysis may be carried out with regard to the costs, the schedule or the like. With this trend analysis, a possible variance from a predetermined desired trend may be evaluated so that an adjustment may be performed.

As an example, the comparative reports may be used to evaluate a rate with which the respective project is progressing between two updates. Based on this rate, slow moving projects or the need of an urgency of a project may be detected. Furthermore, the need for an additional synchronization between the schedules of the PPM tool 11 and the PLM tool 12 may be discovered.

The comparative report may be defined by the user via the user interface. Among others, the user may define the data of the PPM tool 11 and/or the PLM tool 12 which have to be output to the user when a predetermined state is entered. The predetermined state may depend on the PPM tool 11 or the PLM tool 12 or a combination thereof. As well, the comparative report may be output at a given point in time or at predefined time intervals.

Then, when the Connector tool 14 has evaluated that the comparative report has to be established, the Connector tool 14 automatically gathers the requested data from the PPM tool 11 and/or the PLM tool 12 and/or its database 14a and automatically outputs the report with the data via the user interface to the user. Of course, instead of or in addition to the output of the report, the report is stored on the database 14a of the Connector tool 14.

The comparative report may comprise a summary of the comparison and/or a visualization of the comparison with differences being highlighted in colours. As well, the comparative report may be individualized using filter techniques.

The comparative report may also be converted into the format of known evaluation tools, for example into the format of a Microsoft Office Excel sheet. With these known tools, the comparative report may be statistically and/or mathematically evaluated in detail.

## Claims

1. A method for operating a Project Portfolio Management tool (PPM tool) and a Product Lifecycle Management tool (PLM tool) wherein the PPM tool (11) manages a group of projects and wherein the PLM tool (12) executes a specific project, **characterized in that** a Connector tool (14) generates a comparative report which includes data from the PPM tool (11) and the PLM tool (12).

2. A method for operating a Project Portfolio Management tool (PPM tool) and a Product Lifecycle Management tool (PLM tool) wherein the PPM tool (11) manages a group of projects and wherein the PLM tool (12) executes a specific project, **characterized in that** a Connector tool (14) generates a comparative report which includes data from the PPM tool (11) at different points in time or which includes data from the PLM tool (12) at different points in time.

3. The method of one of the preceding claims wherein the comparative report is generated when the PPM tool (11) and/or the PLM tool (12) has entered a predetermined state or when a predefined point in time occurs.

4. The method of one of the preceding claims wherein a trend analysis is carried based on the comparative report.

5. The method of one of the preceding claims wherein the Connector tool (14) automatically exchanges data between the PPM tool (11) and the PLM tool (12).

6. The method of claim 5 wherein the Connector tool (14) causes the PPM tool (11) to send data to the PLM tool (12) or causes the PLM tool (12) to send data to the PPM tool (11).

7. The method of one of claims 5 or 6 wherein the Connector tool (14) causes the PPM tool (11) to send a master schedule to the PLM tool (12) after the master schedule is defined or updated, and wherein the Connector tool (14) causes the PLM tool (12) to send an updated schedule to the PPM tool (11) after routine management steps based on the master schedule are carried out.

8. A computer program being programmed such that the method of one of claims 1 to 7 is carried out when the computer program is running on a computer.

9. A system for operating a Project Portfolio Management tool (PPM tool) and a Product Lifecycle Management tool (PLM tool) wherein the PPM tool (11) is provided for managing a group of projects and wherein the PLM tool (12) is provided for executing a specific project, **characterized in that** a Connector tool (14) is provided for generating a comparative report which includes data from the PPM tool (11) and the PLM tool (12).

10. A system for operating a Project Portfolio Management tool (PPM tool) and a Product Lifecycle Management tool (PLM tool) wherein the PPM tool (11) is provided for managing a group of projects and wherein the PLM tool (12) is provided for executing a specific project, **characterized in that** a Connector tool (14) is provided for generating a comparative report which includes data from the PPM tool (11) at different points in time or which includes data from the PLM tool (12) at different points in time.

11. The system of one of claims 9 or 10, wherein the Connector tool (14) is provided for automatically exchanging data between the PPM tool (11) and the PLM tool (12).

12. The system of one of claims 9 to 11 wherein the Connector tool (14) comprises a computer program according to claim 7.

13. The system of one of claims 9 to 12 wherein the PPM tool (11) and the PLM tool (12) and the Connector tool (14) are implemented on a number of computers within an Intranet of an enterprise.
